# EUROPEAN PATENT SPECIFICATION

(11) **EP 1 986 461 B1**
(45) Date of publication and mention of the grant of the patent: **29.05.2013**
(21) Application number: 07702106.1
(22) Date of filing: 17.01.2007
(51) Int. Cl.: H04W 36/14

(54) **Heterogeneous network and handover method between heterogeneous networks**
Heterogenes Netzwerk und weiterreichverfahren zwischen heterogenen Netzwerken
Réseau hétérogène et procédé de transfert entre des réseaux hétérogènes

(30) Priority: 18.02.2006 CN 200610033773
(43) Date of publication of application: 29.10.2008
(73) Proprietor: Huawei Technologies Co., Ltd., Longgang District, Shenzhen Guangdong 518129 (CN)
(72) Inventor: ZHONG, Hui, Shenzhen, Guangdong 518129 (CN); WANG, Shu, Shenzhen, Guangdong 518129 (CN); LIU, Yuan, Shenzhen, Guangdong 518129 (CN)
(74) Representative: Thun, Clemens
(86) International application number: PCT/CN2007/000174
(87) International publication number: WO 2007/093110

(56) References cited:
- EP-A- 1 463 364
- WO-A-2006/099404
- US-A1- 2005 249 161
- EBERSPÄCHER, VÖGEL: "GSM Global System for mobile Communication" 1999, TEUBNER , XP002551604 * paragraph [8.4.1] *
- JUNGHOON JEE: "handover commands update: LB issue #18: Comment 495"[Online] XP002551601 Retrieved from the Internet: URL:http://www.ieee802.org/21/doctree/2006 _Meeting_Docs/2006-09_meeting_docs/21-06-0 677-08-0000-Handover_Commands_Update.doc> [retrieved on 2009-10-20]
- VIVEK GUPTA: "IEEE P802.21"[Online] 20 July 2004 (2004-07-20), pages 1-10, XP002551602 Retrieved from the Internet: URL:http://www.ieee802.org/21/doctree/2004 _Meeting_Docs/2004-09_meeting_docs/21-04-0 087-05-0000-Draft_technical_requirements> [retrieved on 2009-10-20]
- "Media independent handover"[Online] March 2005 (2005-03), XP002551603 Retrieved from the Internet: URL:http://www.ieee802.org/21/doctree/2005 _Meeting_Docs/2005-03_meeting_docs/21-05-0 240-00-0000-Joint_Harmonized_MIH_Proposal_ Draft_Text.doc> [retrieved on 2009-10-20]
- DIMOPOULOU L. ET AL.: 'Fast Handover Support in a WLAN Environment: Challenges and Perspectives' NETWORK, IEEE vol. 19, no. 3, May 2005 - June 2005, pages 14 - 20, XP011134800

## Description

### FIELD OF THE INVENTION

The present invention relates to a technical field of heterogeneous network, and more particularly to a heterogeneous network and a method for handover between heterogeneous networks.

### BACKGROUND

Currently, networks of different architecture are used, for example, Wireless Local Area Networks (WLANs) defined in 802.11, Wireless Metropolitan Area Networks (WMANs) defined in 802.16, 3G cell mobile communication networks defined in the Third Generation Partnership Project (3GPP). For the users, it is difficult to hand over and roam between the networks of different architecture conveniently without affecting the service continuity. Thus, the 802.21 protocol is developed to solve the previous problem. The 802.21 (Media Independent Handover Services) protocol defined by the Institute of Electrical and Electronics Engineers (IEEE) is a standard according to which the information of the data link layer and other related network information is provided to upper layers for optimizing the handover between the heterogeneous networks. The 802.21 protocol satisfies the requirements for soft and hard handover between different media and provides related assistant mechanisms for realizing the handover. The objective is to enable client devices to automatically select the network connection types and access points of the best quality when roaming between networks, to realize seamless handover without the necessity of user intervention, and to improve the experience of the users of mobile devices by supporting the handover between the heterogeneous networks.

In the 802.21 framework, the most important feature is the introduction of Media Independent Handover Function (MIHF) entities. The MIHF is defined as a mobile node providing support to the mobile function and a logic layer in the mobile management protocol stack of network elements, and assists and promotes the decision-making process.

The 802.21 protocol defines Media Independent Event Service (MIES), Media Independent Command Service (MICS), Media Independent Information Service (MIIS), and Service Access Points (SAPs) for the media independent handover. Among them, the important events include Link up (a link is established), Link_Down (a link disconnects), Link_Going_Down (a link is going to break), and Link_Handover_Imminent (a link handover starts); the important commands include MIH_Capability_Discover (discover the MIH capability), MIH_Switch (switch the MIH), MIH_Configure (configure the MIH), and MIH_Scan (scan the MIH); the important information includes Data_Rates (the data rate), Location_LatLong (the latitude and longitude location information), Networks_Supported (the supported networks), Quality_of_Service (quanlity of service"QoS); the MIHF includes media independent SAPs that are independent of the interface types supported by terminals and media dependent extensible SAPs. Document EP1463364A2 describes that an apparatus selects an access network in a mobile station capable of receiving a service from a multi-wireless communication network. The apparatus comprises a physical layer capable of communicating with the multi-wireless communication network; an access network selector for storing information on an available network in the multi-wireless communication network and selecting a network during communication and handoff; and a higher layer for providing the information stored in the access network selector to a user, and delivering selection information of a particular network in the multi-wireless communication network to the access network selector according to a method set by the user.

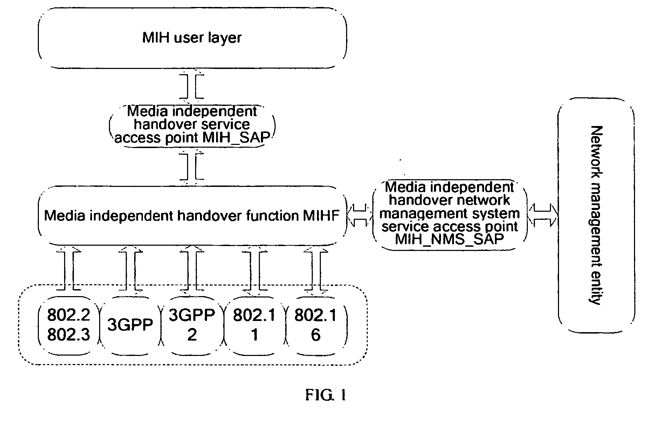

FIG 1 is a structural view of layers of a heterogeneous network of the prior art. As shown in FIG 1, the heterogeneous network includes an 802.2 or 802.3 access network, a 3GPP access network, a 3GPP2 access network, an 802.11 access network, and an 802.16 access network. These access networks are connected to an MIHF layer through media dependent SAPs to exchange information. The MIH user layers are upper network layers, that is, the third layer and layers above the third layer, including the application layer, the transport layer, and the network layer, which are connected to the MIHF layer through media independent SAPs to exchange information. The MIHF layer is connected to a network management entity through an MIH_NMS_SAP (the service access point of the MIH network management system) to exchange information. The MIH user layers make decisions on handover, and select links according to input from the MIH and the context. The MIHF provides the abstract service to upper layers, and provides a set of defined interfaces which expose service primitives independent of detailed access techniques; the MIHF communicates with the mobile management protocol stack in the lower layer through the interfaces provided by specific access techniques. The MIHF simplifies the recognition of handover conditions, and provides the necessary information for effective handover.

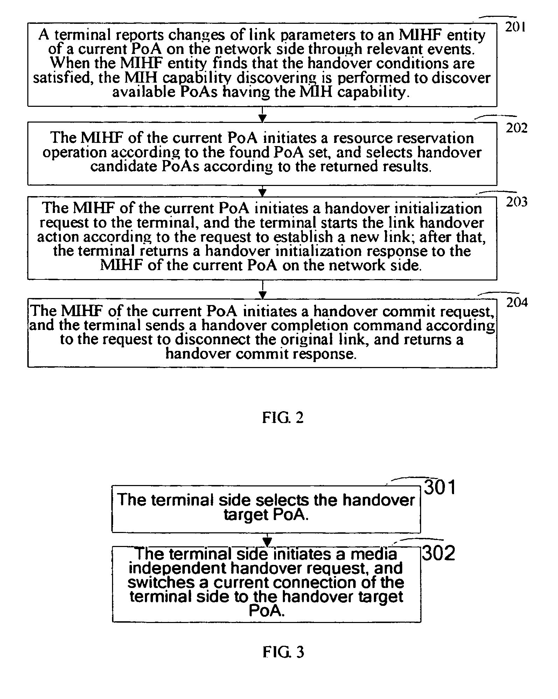

Currently, the 802.21 protocol only provides a handover solution from the 802.11 initiated by the network side to 3GPP2. FIG. 2 is a flow chart of the handover of the prior art. As shown in FIG 2, the method for handover between heterogeneous networks is as follows:

Block 201: A terminal reports changes of link parameters to an MIHF entity of a current Point of Attachment (PoA) on the network side through relevant events. When the MIHF entity finds that the handover conditions are satisfied, the MIH capability discovering is performed to discover available PoA with the MIH capability.

In this block, the MIHF entity can also discover the available PoA with the MIH capability according to the information of the existing PoA maintained by the MIHF entity.

Block 202: The MIHF of the current PoA initiates a handover preparation operation according to the found PoA set, and selects handover candidate PoAs according to the returned results.

Block 203: The MIHF of the current PoA initiates a handover initialization request to the terminal, and the terminal starts the link handover action according to the request to establish a new link; after that, the terminal returns a handover initialization response to the MIHF of the current PoA on the network side.

Block 204: The MIHF of the current PoA initiates a Handover commit request, and the terminal sends a handover completion command according to the request to disconnect the original link, and returns a Handover commit response.

The solution of the prior art has the following problems:

The handover process initiated from the terminal side does not exist. As the terminal specifies the handover policies for and guides the media independent handover in many cases, the absence of the handover process initiated from the terminal side has a great influence on the handover conducted by the user; in addition, the previous solution is not reasonable or lacks some essential operations in some blocks, for example, the operation of the candidate PoAs is completed on only the network side, and the negotiation with the terminal is not included in the process. However, the network side cannot obtain the network interface types, carriers, and charge selection policies supported by the terminal. Therefore, the candidate PoAs cannot be determined uniquely. Meanwhile, the solution of the prior art lacks the interaction process for obtaining information in the handover decision-making, and the network side cannot discover the detailed information of the candidate PoAs based on the MIH capability only.

Therefore, the reliability and universality of the handover between the heterogeneous networks is low in the prior art.

### SUMMARY

The present invention is directed to a method for handover between heterogeneous networks, which realizes a handover initiated from a terminal side, and improves reliability and universality of the handover.

According to the above main objectives, the present invention provides a method for handover between heterogeneous networks, which includes the following blocks:
selecting, by a terminal side MIH user layer, a handover target PoA;
initiating, by the terminal side MIH user layer, a MIH request, and switching the terminal to the handover target PoA;
wherein the selecting, by the terminal side MIH user layer, the handover target PoA comprises:
   obtaining, by the terminal side MIH user layer, a list of the PoAs with MIH capability from an original PoA or an MIH information server; obtaining, by the terminal side MIH user layer, information of the POAs with MIH capability from an original PoA or an MIH information server; and selecting, by the terminal side MIH user layer, the handover target PoA according to the information of the POAs.

It is known from the above technical solutions that the present invention realizes handover between the heterogeneous networks initiated by the terminal side, improves the current handover process, and enhances the reliability and universality of the handover.

Moreover, the solutions of the present invention use the standard primitives, which improve the universality of the solutions, and solves the problem of incompatibility between the prior art and the standards. Meanwhile, by arranging and optimizing the primitives used in the handover, the solutions improve the handover efficiency.

### BRIEF DESCRIPTION OF THE DRAWINGS

The present invention will become more fully understood from the detailed description given herein below for illustration only, and thus are not limitative of the present invention, and in which:

FIG 1 is a structural view of layers of a heterogeneous network of the prior art;

FIG 2 is a flow chart of the handover of the prior art;

FIG 3 is an exemplary flow chart of a method for handover between heterogeneous networks according to the first embodiment of the present invention;

FIG 4 is a structural view of a heterogeneous network according to the first embodiment of the present invention;

FIG 5 is a flow chart of a method for handover between heterogeneous networks according to the first embodiment of the present invention;

FIG 6 is an exemplary flow chart of a method for handover between heterogeneous networks according to the second embodiment of the present invention;

FIG 7 is a structural view of a heterogeneous network according to the second embodiment of the present invention; and

FIG 8 is a flow chart of a method for handover between heterogeneous networks according to the second embodiment of the present invention.

### DETAILED DESCRIPTION

A heterogeneous network comprises a terminal side and a network side, wherein the network side comprises an original point of attachment (PoA) and a handover target PoA,

the terminal side is adapted to select the handover target PoA, initiate a media independent handover request, terminate a connection with an original PoA, and establish a connection with the handover target PoA;

the original PoA is adapted to terminate a connection with the terminal side according to the media independent handover request; and

the handover target PoA is adapted to establish the connection with the terminal side according to the media independent handover request.

The terminal side is further adapted to receive information of PoAs with MIH capability, and select the handover target PoA according to the information; and

the original PoA is further adapted to send the information of the PoAs with MIH capability to the terminal side.

The network further comprises :

a media independent handover (MIH) information server, adapted to send information of PoAs in a list of network elements (NEs) with MIH capability to the original PoA according to a request from the original PoA; wherein

the terminal side is further adapted to send a request for a list of the NEs with MIH capability on the network side to the original PoA, receive the list of the NEs with the MIH capability from the original PoA, send a request for obtaining information of all PoAs in the list to the original PoA, receive a response containing the queried Information of the PoAs from the original PoA, select recommended handover PoAs according to the list and the queried Information of the PoAs, send a message requesting the recommended handover PoAs to prepare for a handover to the original PoA, receive a response containing a PoA set of handover candidate PoAs from the original PoA, and select the handover target PoA from the PoA set, send a request for the handover from a current connection to the handover target PoA, receive a response confirming that the handover is to be initiated from the handover target PoA, establish a link connection with the handover target PoA, terminate a link connection with the original PoA, receive a handover completion request from the original PoA, and bear the connection on the link with the handover target PoA;

the original PoA is further adapted to obtain the list of the NEs with the MIH capability from other NEs on the network side in a broadcast or multicast mode according to a request from the terminal side, and send the list to the terminal side, send a request for querying PoA information to the MIH information server according to the request from the terminal side, receive a response containing the queried Information of the PoAs from the MIH information server, and send the information of PoAs in the list to the terminal side, send a request for handover preparation to other PoAs on the network side recommended by the handover receive a response containing handover preparation information from the recommended handover PoAs, and select the PoA set of the handover candidate PoAs according to the response containing handover preparation information, send information of the PoA set of the handover candidate PoAs to the terminal side, send an MIH handover complete request to the terminal side according to an MIH handover complete request from the handover target PoA, terminate the link connection with the terminal side, and send an MIH handover complete response to the handover target PoA;

the handover target PoA is further adapted to send MIH capability information to the original PoA according to broadcast or multicast initiated by the original PoA, prepare for the handover according to a request from the original PoA, and send the response containing handover preparation information to the original PoA, send the response confirming that the handover is to be initiated to the terminal side according to a request from the terminal side, establish a link connection with the terminal side, and send the MIH handover complete request to the original PoA, receive the MIH handover complete response sent from the original PoA, and bear the connection on a link with the terminal side.

A method for handover between heterogeneous networks includes the following blocks:

selecting, by a terminal side, a handover target PoA; and initiating, by the terminal side, a media independent handover request, and

switching a current connection of the terminal side to the handover target PoA.

The selecting, by the terminal side, the handover target PoA comprises:

obtaining, by an MIH user layer of the terminal side, information of NEs with MIH capability; and

selecting, by an MIH user layer of the terminal side, the handover target PoA according to the information of NEs.

The obtaining, by the MIH user layer of the terminal side, the information ofNEs with the MIH capability comprises:

sending, by the MIH user layer of the terminal side, an MIH capability discover request to an MIHF of the terminal side, forwarding, by the MIHF of the terminal side, the request to an MIHF of the original PoA, and sending, by the MIHF of the original PoA, the MIH capability discover request to other NEs on the network side; sending, by the NEs with the MIH capability, a response containing MIH capability information to the MIHF of the original PoA; sending, by the MIHF of the original PoA, the response to the MIH user layer of the terminal side through the MIHF of the terminal side, and

obtaining, by the MIH user layer of the terminal side, a PoA set with the MIH capability and information of the PoA set according to the response; and

sending a request for information of PoAs of the PoA set to an MIH information server;

and responding, by the MIH information server, with the information of the PoAs.

The obtaining, by an MIH user layer of the terminal side, the information of NEs with the MIH capability comprises:

sending, by an MIH user layer of the terminal side, an MIH capability discover request to an MIH information server,

obtaining and returning, by the MIH information server, a PoA set with the MIH capability to an MIHF of the terminal side; and

sending a request for information of PoAs of the PoA set to the MIH information server; and

responding, by the MIH information server, with the PoA information of

the information of the PoAs comprises network type and identifier, carrier type and identifier, security, quality of service (QoS), and fee information.

The selecting by the MIH user layer of the terminal side, the handover target PoA according to the information of NEs comprises:

selecting, by the terminal side, a PoA set of recommended handover PoAs according to the information of the NEs with the MIH capability, and sending an MIH handover initiate request containing the PoA set information to an original PoA;

sending, by the original PoA, a request of handover preparation to the recommended handover PoAs according to the MIH handover initiate request;

sending, by the recommended handover PoAs, handover preparation information to the original PoA after the handover preparation is completed;

selecting, by the original PoA, recommended candidate PoAs according to information of the PoA set ofthe recommended handover PoAs and the handover preparation information, and sending information of the recommended candidate PoAs to the terminal side; and

selecting, by the terminal side, the handover target PoA according to the information of the recommended candidate PoAs.

The initiating, by the terminal side, the media independent handover request comprises:

sending, by the terminal, a handover commit request to the handover target PoA ; and

returning, by the handover target PoA, a response allowing the handover, and sending, by the network interface communicating to the handover target PoA of the terminal side, a handover imminent instruction to the MIH user layer of the terminal side through the MIHF on the terminal layer.

Before the selecting, by the terminal side, the handover target PoA, the method further comprises associating the terminal to an original PoA, and establishing a session with the original PoA through a home agent HA.

The switching the current connection of the terminal side to the handover target PoA comprises establishing a link connection with the handover target PoA, and terminating the link connection of an original PoA.

After terminating the link connection of the original PoA, the method further comprises sending, by a network interface of the terminal side connected to the original PoA, a link down notification to an MIHF of the terminal side and an MIHF of the original PoA;

after initiating, by the terminal side, the media independent handover request, and switching the current connection of the terminal side to the handover target PoA, the method further comprises sending, by a network interface of the terminal side connected to the handover target PoA, a link up notification to the MIHF of the terminal side and the MIHF of the handover target PoA.

After the initiating, by the terminal side, the media independent handover request, and switching the current connection of the terminal side to the handover target PoA, the method further comprises:

sending, by an MIHF of the handover target PoA, an MIH handover complete command to an MIHF of the original PoA, and forwarding, by the original PoA, cached data packets in an undetermined sending state to the handover target PoA according to the MIH handover complete command, and releasing resources occupied by old link; sending, by a network interface of a new link between the handover target PoA and the terminal, an instruction indicating that the handover is completed to upper layers.

A heterogeneous network comprises a terminal side, an original PoA and a handover target PoA, and a network side, wherein the network side comprises an original PoA and a handover target PoA,

the terminal side is adapted to send information of the handover target PoA to the original PoA, terminate a connection with the original PoA, and establish a connection with the handover target PoA;

the original PoA is adapted to initiate a media independent handover request and terminate the connection with the terminal side according to the information of the handover target PoA from the terminal side; and

the handover target PoA is adapted to establish the connection with the terminal side according to the media independent handover request.

The information of the handover target PoA is information of a PoA set of handover candidate PoAs;

the original PoA is further adapted to select the handover target PoA according to the information of the PoA set.

The network further comprises:

a media independent handover (MIH) information server, adapted to send information of PoAs in a list of NEs to the original PoA according to a request from the original PoA; wherein

the terminal side is further adapted to select the PoA set of the handover candidate PoAs according to information of recommended handover PoAs from the original PoA, send the information of the PoA set to the original PoA, confirm that a handover is to be initiated and send an MIH handover commit response to the original PoA according to an MIH handover commit request from the original PoA, establish a link connected with the handover target PoA, receive an MIH handover complete request from the original PoA, terminate a link connected with the original PoA, send an MIH handover complete response to the original PoA, and bear connection through the link connected with the handover target PoA;

the original PoA is further adapted to obtain the list of NEs with MIH capability from other NEs on the network side in a broadcast or multicast mode, send a request for information of PoAs in the list of NEs to the MIH information server, receive the information of PoAs in the list from the MIH information server, send a request for handover preparation to the PoAs in the list and obtain information of handover preparation, select the recommended PoAs according to the list of NEs and the handover preparation information, send the information of the recommended handover PoAs to the terminal side, select the handover target PoA according to the information of the PoA set from the terminal side, send a request confirming that a handover is to be initiated to the terminal side, receive response from the terminal side, and terminate a link connected with the terminal side; and

the handover target PoA is further adapted to send MIH capability information to the original PoA according to broadcast or multicast initiated by the original PoA, prepare for the handover according to a request from the original PoA, and send the information of handover preparation to the original PoA, establish a link connected with the terminal side, send an MIH handover complete request to the original PoA, receive an MIH handover complete response sent from the original PoA, and bear the connection through the link connected with the terminal side.

A method for handover between heterogeneous networks comprises:

sending, by a terminal side, information of a handover target PoA to a networkterminal side; and

initiating, by the network side, a media independent handover request according to the information of the handover target PoA from the terminal side, and switching a current connection of the terminal side to the handover target PoA.

The obtaining, by the network side, the information of the handover target PoA from the terminal side comprises:

selecting, by the network side, recommended handover PoAs, and sending information of the recommended handover PoAs to the terminal side; and

selecting, by the terminal side, a PoA set as handover candidate PoAs according to information of NEs, and sending information of the PoA set to the network side.

The selecting, by the network side, the recommended handover PoAs, and sending the information of the recommended handover PoAs to the terminal side comprises:

sending, by an MIH user layer of the original PoA, an MIH capability discover command to an MIHF of the original PoA, and sending, by the MIHF of the original PoA, an MIH capability discover request to other NEs on the network side;

sending, by the NEs with the MIH capability, a response containing MIH capability information to the MIH user layer of the original PoA through the MIHF of the original PoA, and obtaining, by the MIH user layer of the original PoA, the PoA set with the MIH capability and information of the PoA set with the MIH capability according to the response containing MIH capability information; and

selecting, by the original PoA, the recommended handover PoAs from the PoA set with the MIH capability, and sending the information of the recommended handover PoAs to the terminal side.

The selecting, by the network side, the recommended handover PoAs, and sending the information of the recommended handover PoAs to the terminal side comprises:

sending, by the MIH user layer of the original PoA, an MIH capability discover command to an MIH information server, and

returning, by the MIH information server, the PoA set with the MIH capability to the MIH user layer on the original PoA

requesting, by the MIH user layer of the original PoA, for obtaining information of the PoA found through the capability discovering to the MIH information server, and responding, by an MIH media server, with the information of the PoA; and

selecting, by the original PoA, the recommended handover PoAs from the PoA set with the MIH capability, carrying the information of the recommended handover PoAs in an MIH initialization request, and sending the information to the terminal side.

The selecting, by the terminal side, the PoA set of handover candidate PoAs with MIH capability according to the information of NEs with MIH capability and sending the information of the PoA set to the network side comprises

selecting, by the terminal side, the handover candidate PoAs according to the information of the recommended handover PoAs from the original PoA, obtaining the PoA set of the handover candidate PoAs, and sending information of the PoA set to the original PoA through an MIH handover initiate response.

The initiating, by the network side, the media independent handover request according to the information of the handover target PoA from the terminal side comprises:

selecting, by the original PoA, the handover target PoA according to the information of the PoA set of the handover candidate PoAs from the terminal side, and sending a handover commit request for switching a current connection of the terminal side to the handover target PoA;

obtaining, and returning, by the terminal side, a response allowing the handover and

sending, by a network interface connecting the handover target PoA and the terminal side, a handover imminent instruction to an MIH user layer of the handover target PoA through an MIHF of the handover target PoA.

The switching the current connection of the terminal side to the handover target PoA comprises establishing a link connection between the handover target PoA and the terminal side, and terminating a link connection between the original PoA and the terminal side.

After the terminating the link connection between the original PoA and the terminal side, the method further comprises sending, by a network interface of original PoA connecting with the terminal side, a link down notification to an MIHF of the original PoA and an MIHF of the terminal side;

after establishing the link connection between the handover candidate PoAs and the terminal side, the method further comprises sending, by a network interface of the handover target PoA connecting with the terminal side, a link up notification to the MIHF of the handover target PoA.

After the switching the current connection of the terminal side to the handover target PoA, the method further comprises:

sending, by an MIHF of the handover target PoA, an MIH handover complete command to an MIHF of the original PoA, and forwarding, by the original PoA, cached data packets in an undetermined sending state to the handover target PoA according to the MIH handover complete command, and releasing resources occupied by old link; sending, by a network interface of the link between the handover target PoA and the terminal, an instruction indicating that a handover is completed to upper layers.

It is known from the above technical solutions that the present invention realizes handover between the heterogeneous networks initiated by the terminal side, improves the current handover process, and enhances the reliability and universality of the handover.

Moreover, the solutions of the present invention use the standard primitives, which improve the universality of the solutions, and solves the problem of incompatibility between the prior art and the standards. Meanwhile, by arranging and optimizing the primitives used in the handover, the solutions improve the handover efficiency.

To make the objectives, technical solutions, and beneficial effects of the present invention more understandable, the present invention is described in detail below with reference to the embodiments and accompanying drawings.

The basic idea of the present invention is that a terminal side and a network side negotiate to select a handover candidate PoAs, and initiate a handover from a current connection to the PoA.

The handover may be initiated by either the terminal side or the network side.

The heterogeneous network and the method for handover between heterogeneous networks of the present invention will be illustrated in detail below with reference to the detailed embodiments.

The first Embodiment

In this embodiment, the handover initiated by the terminal side is taken as an example to illustrate the heterogeneous network and the method for handover between heterogeneous networks of the present invention in detail.

The heterogeneous network of the present invention includes a terminal side and a network side. The network side includes an original PoA and a handover target PoA.

The terminal side is adapted to select the handover target PoA, initiate a media independent handover request, terminate a connection with the original PoA, and establish a connection with the handover target PoA.

The original PoA is adapted to terminate the connection with the terminal side according to the media independent handover request.

The handover target PoA is adapted to establish the connection with the terminal side according to the media independent handover request.

The terminal side and the network side may negotiate with each other to obtain a plurality of recommended candidate PoAs, that is, a PoA set of handover candidate PoAs, and select information of a handover target PoA according to information of the PoA set.

FIG. 3 is an exemplary flow chart of a method for handover between heterogeneous networks according to the first embodiment of the present invention. As shown in FIG 3, the method for handover between heterogeneous networks of the present invention includes the following blocks.

Block 301: The terminal side selects the handover target PoA.

Block 302: The terminal side initiates a media independent handover request, and switches a current connection of the terminal side to the handover target PoA.

Here, an MIH user layer of the terminal side realizes the negotiation between the terminal side and the network side to select the handover target PoA and to initiate the handover.

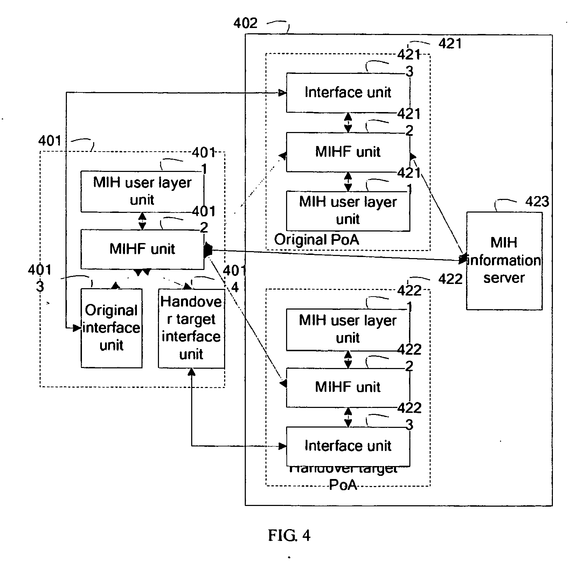

FIG. 4 is a structural view of a heterogeneous network according to the first embodiment of the present invention. As shown in FIG. 4, for example, the terminal side is a station/user equipment (STA/UE). The heterogeneous network of the present invention includes the STA/UE 401 and the network side 402. The network side 402 includes an original PoA 421, a handover target PoA 422, and an MIH information server (IS) 423. The network side 402 can also include other PoAs.

The STA/UE 401 is adapted to initiate the handover when the wireless environment of the current connection becomes unacceptable, and send an MIH capability discover request to the original PoA 421 for a list of NEs with the MIH capability on the network side 402; receive a list of the NEs with the MIH capability from the original PoA 421; send an MIH get information request to the original PoA 421 according to the received list of NEs with the MIH capability, and request for information of all PoAs with the MIH capability in the list of NEs; receive an MIH get information response containing the information of PoAs from the original PoA 421; select one or more recommended handover PoAs according to the received list of NEs and MIH get information response; send an MIH handover initiate request containing the information of the selected recommended handover PoAs to the original PoA 421 for requesting the selected recommended handover PoAs to prepare for the handover; receive an MIH handover initiate response from the original PoA 421, and select the handover target PoA 422 from the one or more handover candidate PoAs; send an MIH handover commit request to the handover target PoA 422, and request for switching the current connection to the handover target PoA 422; receiving an MIH handover commit response from the handover target PoA 422, and confirming that the handover is to be initiated; establish a link connected with the handover target PoA 422; receive an MIH handover complete request from the original PoA 421, and terminate a link connection with the original PoA 421; receive a handover completion request from the original PoA 421; bear the connection on a link with the handover target PoA 422; dissociate from the original PoA 421.

The original PoA 421 is adapted to obtain the list of the NEs with the MIH capability from other NEs on the network side 402 in a broadcast or multicast mode according to the MIH capability discover request from the STA/UE 401, and send the list to the STATUE 401; send the MIH get information request to the MIH IS 423 according to the MIH get information request from the STA/UE 401; receive the MIH get information response containing the information of the PoAs from the MIH IS 423, and send the response information to the STA/UE 401; send an MIH handover prepare request to other recommended handover PoAs on the network side 402 selected by the STA/UE 401 according to the MIH handover initiate request from the STA/UE 401; receive an MIH handover prepare response containing handover preparation information from the recommended handover PoAs, and select recommended candidate PoAs, that is, the PoA set as handover candidate PoAs, according to the response information; carry the information of the recommended candidate PoAs in the MIH handover initiate response, and send the response to the STATUE 401; send the MIH handover complete request to the STA/UE 401 according to the MIH handover complete request from the handover target PoA 422; terminate the link connection with the STA/UE 401, and send an MIH handover complete response to the handover target PoA 422; dissociate from the STA/UE 401.

The handover target PoA 422 is adapted to send the MIH capability information to the original PoA 421 according to the broadcast or multicast initiated by the original PoA 421; prepare for the handover according to the MIH handover prepare request from the original PoA 421, and send the response containing handover preparation information to the original PoA 421; send the MIH handover commit response to the STA/UE 401 according to the MIH handover commit request from the STA/UE 401, and confirm that the handover is to be initiated; establish the link connection with the STA/UE 401, and send the MIH handover complete request to the original PoA 421; receive the MIH handover complete response from the original PoA 421; bear the connection on the link with the STA/UE 401.

The MIH IS 423 is adapted to carry the information of the PoAs in the list of NEs in the MIH get information response according to the MIH get information request from the PoA 421, and send the response to the original PoA 421.

In actual applications, the network side 402 further includes a user agent (HA) 424 for registering a mobile IP for the STA/UE 401.

In this situation, the STA/UE 401 is further adapted to register a mobile IP on the HA 424.

In detail, the STA/UE 401 includes an MIH user layer unit 4011, an MIHF unit 4012, an original interface unit 4013, and a handover target interface unit 4014.

The original interface unit 4013 is adapted to initiate the handover when the wireless environment of the current connection becomes unacceptable, and send a Link going down event to the MIHF unit 4012; terminate the link connection with the original PoA 421, and send a Link down event to the MIHF unit 4012; dissociate from the original PoA 421.

The MIHF unit 4012 is adapted to send an MIH link going down event to the MIH user layer unit 4011 according to the Link going down event from the original interface unit 4013; receive the list of the NEs with the MIH capability from the original PoA 421, and send the list of NEs to the MIH user layer unit 4011; send the MIH get information request from the MIH user layer unit 4011 to the original PoA 421; receive the MIH get information response containing the queried Information of the PoAs from the original PoA 421, and send the response to the MIH user layer unit 4011; receive the MIH handover initiate request from the MIH user layer unit 4011 to the original PoA 421; receive the MIH handover initiate response from the original PoA 421, and send the response to the MIH user layer unit 4011; receive a handover command from the MIH user layer 421; send the MIH handover commit request from the MIH user layer unit 4011 to the handover target PoA 422; receive the MIH handover commit response from the handover target PoA 422, and send the response to the MIH user layer unit 4011.

The MIH user-layer unit 4011 is adapted to send the MIH capability discover request to the original PoA 421 according to the MIH link going down event from the MIHF unit 4012, and request for the information of the PoAs with the MIH capability on the network side 402; send the MIH get information request to the MIHF unit 4012 according to the received information of PoAs with the MIH capability, and request for the information of all of the PoAs with the MIH capability in the list of NEs; select one or more recommended handover PoAs according to the received list of NEs and the MIH get information response; send the MIH handover initiate request containing the information of the selected recommended handover PoAs to the MIHF unit 4012, and request the selected recommended handover PoAs to prepare for the handover; select the handover target PoA 422 from the one or more handover candidate PoAs according to the MIH initiate response from the MIHF unit 4012, send the MIH handover commit request to the MIHF unit 4012, and request for switching the current connection to the handover target PoA 422; send the handover command to the MIHF unit 4012; confirm that the handover is to be initiated according to the Handover commit response from the MIHF unit 4012; receive the MIH handover complete response from the original PoA 421; send the Link down event of the original interface unit 4013 to the MIH user layer unit 4011; send the MIH handover complete instruction from the handover target interface unit 4014 to the MIH user layer unit 4011, and send the MIH handover response to the MIH ser layer unit 4011; bear the connection on a link with the handover target PoA 422.

The handover target interface unit 4014 is adapted to establish a link connected with the handover target PoA 422, and send the Link up event to the MIHF unit 4012; send the MIH handover complete instruction to the MIHF unit 4012.

The original PoA 421 includes an MIHF unit 4212 and an interface unit 4213.

The MIHF unit 4212 is adapted to obtain the list of the NEs with the MIH capability from other NEs on the network side 402 in the broadcast or multicast mode according to the MIH capability discover request from the STA/UE 401, and send the list to the STA/UE 401; send the MIH get information request to the MIH IS 423 according to the MIH get information request from the STA/UE 401; receive the MIH get information response containing the information of PoAs with the MIH capability from the MIH IS 423, and send the response information to the STA/UE 401; send the MIH handover prepare request to other recommended handover PoAs on the network side 402 selected by the STA/UE 401 according to the MIH handover initiate request from the STA/UE 401; receive the MIH handover prepare response containing handover preparation information from the recommended handover PoAs, and select recommended candidate PoAs according to the response information; carry the information of the recommended candidate PoAs in the MIH handover initiate response, and send the response to the STA/UE 401; send the MIH handover complete request to the STA/UE 401 according to the MIH handover complete request from the handover target PoA 422; send the MIH link down event to the MIH user layer unit 4211 according to the Link down event from the interface unit 4213; send the MIH handover complete response to the handover target PoA 422.

The interface unit 4213 is used to terminate the link connection with the STA/UE 401; send the Link down event to the MIHF unit 4212; dissociate from the STA/UE 401.

The original PoA 421 can further include an MIH user layer unit 4211, for receiving the MIH link down event from the MIHF unit 4212 and realizing the MIH upper layer operations.

The handover target PoA 422 includes an MIH user layer unit 4221, an MIHF unit 4222, and an interface unit 4223.

The MIHF unit 4222 is adapted to send the MIH capability information to the original PoA 421 according to the broadcast or multicast initiated by the original PoA 421; prepare for the handover according to the MIH handover prepare request from the original PoA 421, and send the handover preparation information to the original PoA 421; send the MIH handover commit response to the STA/UE 401 according to the MIH handover commit request from the STA/UE 401, and confirm that the handover is to be initiated; send the MIH handover complete request from the MIH user layer unit 4221 to the original PoA 421; send an MIH link up event to the MIH user layer unit 4221 according to the Link up event from the interface unit 4223; send the MIH handover complete response from the original PoA 421 to the MIH user layer unit 4221.

The MIH user layer unit 4221 is adapted to send the MIH handover complete request to the MIHF unit 4222 after the link connection is established; receive the MIH link up event and the handover complete response from the MIHF unit 4222.

The interface unit 4223 is adapted to establish the link connection with the STA/UE 401; send the Link up event to the MIHF unit 4222; bear the connection on the link with the STA/UE 401.

In the previous heterogeneous network, the NEs and terminals can realize the media dependent operations. The heterogeneous network can also include other NEs. The STA/UE 401 can also directly send the MIH get information request to the MIH IS, and request to query the information of the PoAs in the list of NEs.

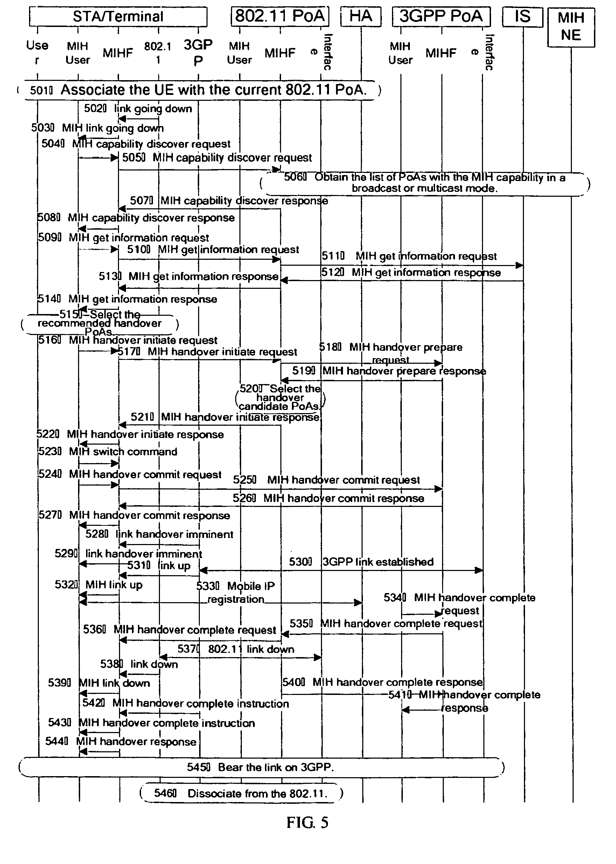

FIG. 5 is a flow chart of a method for handover between heterogeneous networks according to the first embodiment of the present invention. As shown in FIG. 5, the STA/UE is taken as an example of the terminal side, and the method for handover between heterogeneous networks of the present invention includes the following blocks.

Block 501: A station/user equipment (STA/UE) is associated with the current access point (PoA), and a session with the current PoA is established through a mobile IP home agent (HA).

In this embodiment, the current PoA is the 802.11 interface, that is, the original PoA.

Block 502-Block 503: When the wireless environment of the current connection becomes unacceptable, for example, due to signal attenuation, the network interface of the current connection on the STA/UE sends a Link going down event to an MIHF entity, and the MIHF of the STA/UE sends an MIH link going down event to the MIH user layer according to the Link going down event. In this situation, the MIH user layer of the STA/UE can know that the handover process may be initiated according to the event.

If the STA/UE has registered the event service on the PoA in advance, in Block 502-Block 503, a link parameters change event can also be obtained from the current PoA. The MIHF of the STA/UE sends a MIH link parameters report to the MIH user layer according to the event, and notifies the MIH user layer to initiate the handover. In this embodiment, the current interface is the 802.11 interface.

Block 501-Block 503 are the processes for initiating the handover by the terminal side.

Block 504-Block 505: When the MIH user layer on the STA/UE determines to initiate the handover, the MIH user layer sends an MIH capability discover request to the MIHF of the STA/UE, and the MIHF sends the request to the MIHF on the network side.

Block 506: The MIHF on the network side broadcasts or multicasts to other NEs in the network environment, and obtains the list of the NEs with the MIH capability in the broadcast or multicast mode. If an NE also has the MIH capability, the NE sends an MIH capability discover response to the MIHF on the network side. Thus, the list of the NEs with the MIH capability can be obtained in the broadcast or multicast mode.

In this block, the MIHF on the network side can also obtain the list of the NEs with the MIH capability in the multicast mode, the MIHF on the network side can also send the MIH capability discover request to the MIH IS, and the MIH IS returns the relevant information.

Block 507-Block 508: The MIHF on the network side sends the MIH capability discover response to the MIH user layer of the STA/UE through the MIHF of the STA/UE.

Block 509-Block 511: The MIH user layer of the STA/UE obtains the list of the PoA with the MIH capability through the MIH capability discover response, and sends the MIH get information request to the MIH IS through the MIHF of the STA/UE and the MIHF on the network side sequentially, which requests the obtaining of the information of the PoAs in the list, including the network type and identifier, carrier type and identifier, security, QoS, and fee information.

Block 512-Block 514: The MIH IS carries the information of the PoA in the MIH get information response, and sends the response to the MIH user layer of the STA/UE through the MIHF of the original PoA and the MIHF of the STA/UE sequentially.

Block 515: An MIH user or handover decision-making module of the STA/UE selects the recommended handover PoAs according to the obtained PoA information. Here, a plurality of recommended handover PoAs can be selected.

Block 516-Block 517: The MIH user layer of the STA/UE initiates an MIH handover initiate request to the local MIHF, and the local MIHF sends the request to the MIHF of the current PoA through the current connection, that is, the 802.11 interface. Here, the request includes the information of the PoA that the STA/UE recommends to connect to.

Block 518: After the current PoA receives the MIH handover initiate request message sent by the STA/UE, the MIHF of the current PoA sends an MIH handover prepare request to the MIHFs ofall recommended PoAs, and requests preparation for the handover, for example, to reserve the resources.

In the process of this embodiment, for example, the 3GPP PoA is requested to prepare for the handover.

Block 519: According to the request of the current PoA, the MIHF of the new PoA returns an MIH handover prepare response indicating the resource reservation to the MIHF of the current PoA.

Block 520: The current PoA selects the recommended candidate PoAs according to the MIH handover prepare response, that is, selects the PoA set as handover candidate PoAs.

Block 521-Block 522: The current PoA returns the information of the candidate PoAs to the MIH user layer through the MIHF of the STA/UE in an MIH handover initiate response. The MIH user layer of the STA/UE then selects a handover target PoA according to the information of the recommended candidate PoAs.

Block 504-Block 522 are the processes that the terminal side and the network side negotiate on the handover target PoA. The handover target of the STA/UE is the handover target PoA.

Block 523: The MIH user layer on the STA/UE side initiates the handover by sending an MIH switch command, and the STA/UE performs internal operations to prepare for the handover, for example, switching the power state to the power saving mode.

Block 524-Block 525: The MIH user layer on the STA/UE side selects a handover target PoA according to the information of the recommended handover PoAs, generates an MIH handover commit request, and sends the request to the local MIHF. The local MIHF sends the request to the MIHF of the handover target PoA to initiate the handover commitment.

Block 526-Block 527: The handover target PoA processes the MIH handover commit request, and returns a response to the MIH user layer of the STA/UE through the MIHF of the STA/UE to specify whether the handover request is to be processed or discarded.

Block 528-Block 529: After the handover is initiated, the MIHF of the STA/UE receives the Link handover imminent event sent by the network interface of the handover destination, and the MIHF sends a corresponding MIH link handover imminent instruction to the MIH user layer to notify the MIH user layer that the handover is imminent.

In Block 528-Block 529, the MIH link handover imminent instruction can also be sent by the network side, that is, the link layer of the target PoA sends the Link handover imminent event to the MIHF of the handover target PoA, and the MIHF of the target PoA sends the MIH link handover imminnent instruction.

In this embodiment, the network interface of the handover destination, that is, the network interface of the handover target PoA, is a 3GPP network interface, which can be any one of the interfaces such as a UMTS interface or an LTE interface.

Block 530: The STA/UE establishes an L2 connection with the handover target PoA.

In this embodiment, the handover target PoA is a 3GPP interface.

Block 531-Block 532: When the L2 connection is established; the MIHF of the STA/UE will receive the Link up event from the 3GPP network interface, and send a corresponding MIH link up instruction to the MIH user layer of the STA/UE according to the event to notify that the link is established.

In Block 531-Block 532, the MIH link up event can also be sent by the network side, that is, the link layer of the handover target PoA sends the Link up event to the MIHF of the handover target PoA, and the MIHF of the handover target PoA sends the MIH link up event to the MIHF of the STA/UE: the network interface of the handover target PoA connecting the STA/UE can also send the Link up event to the MIHF of the handover target PoA; the MIHF of the handover target PoA can also send the MIH link up event to the MIH user layer of the handover target PoA according to the Link up event sent by the network interface.

Block 533: The mobile IP registration is triggered.

Block 534-Block 536: After the link is established, the MIH user layer of the handover target PoA initiates an MIH handover complete request, and the MIHF of the handover target PoA sends the MIH handover complete request to the MIHF of the original PoA; the MIHF of the original PoA sends the MIH handover complete request to the MIHF of the STA/UE, and the original PoA forwards the registered data packets in an undetermined sending state to the handover target PoA according to the request, and releases the resources occupied by the old link.

Block 537: The 802.11 link disconnects.

Block 538-Block 539: When the original PoA terminates the old link, the network interface of the handover destination sends a Link down event to the MIHF of the STA/UE, and the MIHF of the STA/UE sends an MIH link down event to the MIH user layer of the STA/UE to indicate that the old link has become unavailable.

In Block 538-Block 539, the STA/UE has registered the Link down event in advance, so the STA/UE can receive the event sent by the network interface connected to the original PoA; when the network side registers the Link down event in advance, the MIHF of the original PoA can also receive the Link down event sent by the network interface and send the MIH link down event to the MIH user layer of the original PoA to indicate that the old link has become unavailable.

In this process, Block 538-Block 539 may also be skipped.

Block 540-Block 541: The MIHF of the original PoA sends the MIH handover complete response to the MIHF of the handover target PoA, and the MIHF of the handover target PoA sends the response to the MIH user layer of the handover target PoA to complete the handover.

Block 542-Block 543: After the handover is completed, the MIHF on the STA/UE side receives a link handover complete instruction from the network interface of the network destination, and sends an MIH link handover complete instruction to the MIH user layer.

In Block 542-Block 543, the upper layers of the MIHF, such as the network layer and the transport layer can redirect the session data flow and update the IP address according to the MIH link handover complete instruction.

Block 544: The MIH user layer of the STA/UE receives an MIH switch response to indicate that the link handover is completed.

Block 545: The current session transfers to the new link.

Block 523-Block 545 are the processes for switching the current link to the handover target PoA.

Block 546: The STA/UE dissociates from the original PoA, and the process ends.

In the above process, Block 546 can be skipped after Block 545 is performed, and the process directly ends.

In this embodiment, when the wireless environment of the current connection becomes unacceptable, the terminal side initiates the media independent handover. In addition, the handover can be initiated according to other requirements, for example, a user initiates the handover according to his or her own requirements. The original PoA connected to the STA/UE can also be other PoAs such as a 3GPP PoA, and the handover target PoA can also be other PoAs such as a 3GPP2 PoA.

The second embodiment

In this embodiment, the handover initiated by the network side is taken as an example to illustrate the heterogeneous network and the method for handover between heterogeneous networks of the present invention in detail.

The heterogeneous network of the present invention includes a terminal side and a network side, which includes an original PoA and a handover target PoA.

The terminal side is adapted to send information of the handover target PoA to the original PoA, terminate a connection with the original PoA, and establish a connection with handover candidate PoAs.

The original PoA is adapted to initiate a media independent handover request and terminating the connection with the terminal side according to information of the handover target PoA from the terminal side.

The handover target PoA is adapted to establish the connection with the terminal side according to the media independent handover request initiated by the original PoA.

The network side can negotiate with the terminal side to obtain a plurality of recommended candidate PoAs from the terminal side, that is, a PoA set as handover candidate PoAs, and select the information of the handover target PoA according to the information of the PoA set.

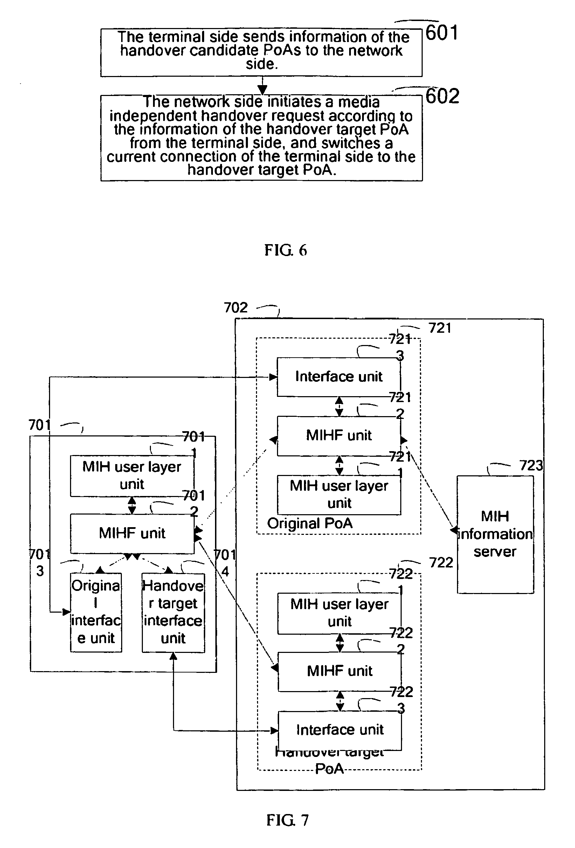

FIG. 6 is an exemplary flow chart of a method for handover between heterogeneous networks according to the second embodiment of the present invention. As shown in FIG. 6, the method for handover between heterogeneous networks is described as follows.

Block 601: The terminal side sends information of the handover target PoA to the network side.

Block 602: The network side initiates a media independent handover request according to the information of the handover target PoA from the terminal side, and switches a current connection of the terminal side to the handover target PoA.

Here, the MIH user layer of the original PoA on the network side can realize the negotiation between the terminal side and the terminal side on the handover target PoA and the initiation of the handover.

FIG. 7 is a structural view of a heterogeneous network according to the second embodiment of the present invention. As shown in FIG. 7, for example, the terminal side is an STA/UE, and the heterogeneous network of the present invention includes an STA/UE 701 and a network side 702, and the network side 702 includes an original PoA 721, a handover target PoA 722, and an MIH IS 723. The network side 702 can also include other PoAs.

The STA/UE 701 is adapted to select the recommended candidate PoAs according to an MIH handover initiate request from the original PoA 721, that is, a PoA set of the handover candidate PoAs; send an MIH handover initiate response containing the information of the recommended PoA to the original PoA 721; send an MIH handover commit response to the original PoA 721 according to an MIH handover commit request from the original PoA 721, and confirm that the handover is to be initiated; establish a link connected with the handover target PoA 722; receive an MIH handover complete request from the original PoA 721; terminate a link connection with the original PoA 721, and send an MIH handover complete response to the original PoA 721; bear the connection on a link with the handover target PoA 722; dissociate from the original PoA 721.

The original PoA 721 is adapted to initiate the handover when the wireless environment of the current connection becomes unacceptable; obtain a list of NEs with the MIH capability from other NEs on the network side 702 in a broadcast or multicast mode; send an MIH get information request to the MIH IS 723, and request for the information of the PoAs in the list of NEs; receive an MIH get information response containing the queried Information of the PoAs from the IS 723; send an MIH handover prepare request to the PoAs in the list of NEs, request to prepare for the handover, and obtain the handover preparation information of the PoAs in the list of NEs; select the recommended PoA according to the list of NEs and the handover preparation information; send an MIH handover initiate request containing the information of the recommended handover PoAs to the STA/UE 701; select the handover target PoA 722 from the one or more handover candidate PoAs according to an MIH handover initiate response from the STA/UE 701; send an MIH handover commit request to the STA/UE 701, and receive an MIH handover commit response from the STA/UE 701 to confirm that the handover is to be initiated; send an MIH handover complete request from the handover target PoA 722 to the STA/UE 701; terminate the link connected with the STA/UE 701; send the MIH handover complete request from the STA/UE 701 to the handover target PoA 722; dissociate from the STA/UE 401.

The handover target PoA 722 is adapted to send MIH capability information to the original PoA 721 according to broadcast or multicast initiated by the original PoA 721; prepare for the handover according to the MIH handover prepare request from the original PoA 721, and send the handover preparation information to the original PoA 721; establish the link connected with the STA/UE 701, and send an MIH handover complete request to the original PoA 721; receive the MIH handover complete response sent by the original PoA 721; bear the connection on a link with the STA/UE 701.

The MIH IS 723 is adapted to carry the information of the PoAs in the list ofNEs in the MIH get information response according to the MIH get information request from the original PoA 721, and send the response to the original PoA 721.

In actual applications, the network side 702 further includes a user agent (HA) 724, which performs the mobile IP registration for the STA/UE 701.

In this situation, the STA/UE 701 is further adapted to perform the mobile IP registration on the HA 724.

In detail, the STA/UE 701 includes an MIH user layer unit 7011, an MIHF unit 7012, an original interface unit 7013, and a handover target interface unit 7014.

The MIH user layer unit 7011 is adapted to send a link handover command to the MIHF unit 7012, and register a mobile IP on the HA 724; bear the connection on a link with the handover target PoA 722; receive an MIH link down event from the MIHF unit 7012.

The MIHF unit 702 is adapted to select the recommended candidate PoAs according to the MIH handover initiate request from the original PoA 721; send the MIH handover initiate response containing the information of the recommended candidate PoAs to the original PoA 721; receive the link handover command from the MIH user layer unit 7011; send the MIH handover commit response to the original PoA 721 according to the MIH handover commit request from the original PoA 721, and confirm that the handover is to be initiated; receive the MIH handover complete request from the original PoA 721; send the MIH link down event to the MIH user layer unit 7011 according to the Link down event from the original interface unit 7013; send the MIH link up event to the MIH user layer unit 7011 according to the Link down event from the handover target interface unit 7014; send the MIH handover complete response to the original PoA 721.

The original interface unit 7013 is used to terminate the link connection with the original PoA 721; send the Link down event to the MIHF unit 7012; dissociate from the original PoA 721.

The handover target interface unit 7014 is adapted to establish the link connection with the handover target PoA 722; send the link up event to the MIHF unit 7012.

The original PoA 721 includes an MIH user layer unit 7211, an MIHF unit 7212, and an interface unit 7213.

The interface unit 7213 is adapted to initiate the media independent handover when the wireless environment of the current connection becomes unacceptable, and send a Link going down event to the MIHF unit 7212; terminate the link connection with the STA/UE 701, and send a Link down event to the MIHF unit 7212; dissociate from the STA/UE 701.

The MIHF unit 7212 is adapted to send the Link going down event from the interface unit 7213 to the MIH user layer unit 7211; obtain a list of the NEs with the MIH capability in a broadcast or multicast mode from other NEs on the network side according to an MIH capability discover request from the MIH user layer unit 7211; carry the received list of NEs in an MIH capability discover response, and send the response to the MIH user layer unit 7211; send a get information request to the MIH IS 723 according to an MIH get information request from the MIH user layer unit 7211, carry the queried Information of the PoAs from the MIH IS 723 in an MIH get information response, and send the response to the MIH user layer unit 7211; send an MIH handover prepare request to the PoAs in the list of NEs according to the MIH handover prepare request from the MIH user layer unit 7211, request to prepare for the handover, carry the obtained handover preparation information of the PoAs in the list of NEs in an MIH handover prepare response, and send the response to the MIH user layer unit 7211; send an MIH handover initiate request containing the information of the recommended handover PoAs from the MIH user layer unit 7211 to the STA/UE 701; send an MIH handover initiate response containing the information of the recommended handover PoA; send an MIH handover commit request from the MIH user layer unit 7211 to the STA/UE 701; send an MIH handover commit response from the STA/UE 701 to the MIH user layer unit 7211; send an MIH handover complete request from the handover target PoA 722 to the STA/UE 701; send the MIH handover complete request from the STA/UE 701 to the handover target PoA 722.

The MIH user layer unit 7211 is adapted to send the MIH capability discover request to the MIHF unit 7212 according to the Link going down event from the MIHF unit 7212, and request for obtaining the list of the NEs with the MIH capability; send the MIH get information request to the MIHF unit 7212 according to the MIH capability discover response from the MIHF unit 7212, and request for obtaining the information of the PoAs in the list of NEs; send the MIH handover prepare request to the MIHF unit 7212 according to the MIH get information response from the MIHF unit 7212, and request the PoAs in the list of NEs to prepare for the handover; select one or more recommended handover PoAs according to the MIH handover prepare response from the MIHF unit 7212, carry the information of the recommended handover PoAs in the MIH handover initiate request, and send the request to the MIHF unit 7212; select the handover target PoA 722 according to the MIH handover initiate response from the MIHF unit 7212, send the MIH handover commit request to the MIHF unit 7212, and request for switching the current link to the handover target PoA 722; receive the MIH handover commit response from the MIHF unit 7212; receive the MIH link down event from the MIHF unit 7212.

The handover target PoA 722 includes an MIH user layer unit 7221, an MIHF unit 7222, and an interface unit 7223.

The interface unit 7223 is adapted to send a Link handover imminent event to the MIHF unit 7222; establish the link connection with the STA/UE 701, and send the link up event to the MIHF unit 7222; send a handover complete instruction to the MIHF unit 7222; bear the connection on a link with the STA/UE 701.

The MIHF unit 7222 is adapted to send the capability information to the original PoA 721 according to the broadcast or multicast initiated by the original PoA 721; prepare for the handover according to the MIH handover prepare request from the original PoA 721, and send the handover preparation information to the original PoA 721; send the MIH link handover imminent event to the MIH user layer unit 7221 according to the Link handover imminent event from the interface unit 7223; send the MIH link up event to the MIH user layer unit 7221 according to the link up event from the interface unit 7223; send the MIH handover complete request from the MIH user layer unit 7221 to the original PoA 721; send the MIH handover complete response from the original PoA 721 to the MIH user layer unit; send an MIH handover complete instruction to the MIH user layer unit according to the handover complete response from the interface unit 7223.

The MIH user layer unit 7221 is adapted to receive the MIH link handover imminent event from the MIHF unit 7222; receive the MIH link up event from the MIHF unit 7222, and send the MIH handover complete request to the MIHF unit 7222; receive the MIH handover complete response and MIH handover complete instruction from the MIHF unit 7222.

In the previous heterogeneous network, the NEs and terminals can realize the media dependent operations, and the heterogeneous network can also include other NEs.

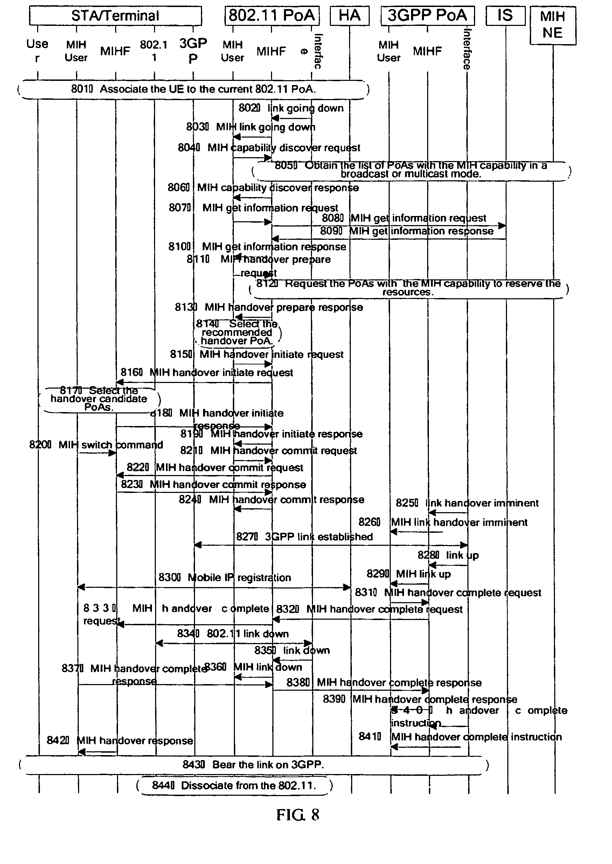

FIG. 8 is a flow chart of a method for handover between heterogeneous networks according to the second embodiment of the present invention. As shown in FIG. 8, the terminal side including the STA/UE is taken as an example, and the method for handover between heterogeneous networks of the present invention is described as follows.

Block 801: The STA/UE is associated with the current PoA, and the session with the current PoA is established through the HA.

In this embodiment, the current PoA is the 802.11 interface, that is, the original PoA.

Block 802-Block 803: When the wireless environment of the current connection becomes unacceptable, for example, due to the signal attenuation, the network interface of the original PoA sends a Link going down event or link parameters change event to the MIHF entity, and the MIHF sends an MIH link going down event or MIH link parameters report event to the MIH user layer according to the Link going down event or the link parameters change event. In this situation, the MIH user layer can know that the handover process may be initiated according to the event.

In Block 802-Block 803, if the PoA has registered relevant event services on the STA/UE, the PoA can obtain the notification of the relevant events through the STA/UE.

Block 801-Block 803 are the processes for initiating the media independent handover by the network side.

Block 804-Block 806: When the MIH user layer of the original PoA determines to initiate the media independent handover, it firstly sends an MIH capability discover request to its MIHF, and broadcasts or multicasts to other NEs in the network environment. If an NE also has the MIH capability, the NE will return an MIH capability discover response to the PoA.

In Block 804-Block 806, the MIHF on the network side can also obtain the list of the NEs with the MIH capability in the multicast mode; the MIHF can also send the MIH capability discover request to the MIH IS, and the MIH IS returns the relevant information.

Block 807-Block 808: After obtaining the list of the PoA with the MIH capability, the MIH user layer of the original PoA sends the MIH get information request to the MIH IS through the MIHF of the original PoA, and requests the obtaining of the information of the PoAs with MIH capability, such as the network type, identifier, and fee information.

Block 809-Block 810: The MIH IS carries the information of the PoAs with MIH capability in an MIH get information response, and sends the response to the MIH user layer of the original PoA through the MIHF of the original PoA.

Block 811-Block 813: After receiving the MIH handover prepare response, the current PoA sends an MIH handover prepare request to all of the PoAs in the list of NEs, and requests the PoA to prepare for the handover. A11 of the PoAs receiving the request prepare for the handover, for example, reserve the resources, and returns an MIH handover prepare response to the MIHF of the current PoA, indicating the handover preparation information; the MIHF of the current PoA then sends the MIH handover prepare response to the MIH user layer of the current PoA.

Block 814: The MIH user layer of the original PoA selects the recommended handover PoAs according to the obtained information of PoAs with MIH capability and the handover preparation information.

In this block, the recommended handover PoAs can also be selected by a handover decision-making module of the original PoA.

Block 815-bock 816: The MIH user layer of the original PoA sends an MIH handover initiate request to the MIHF of the original PoA, and the MIHF of the original PoA sends the request to the MIHF of the STA/UE through the current connection. The request includes the information of the handover PoA recommended by the current PoA.

In this embodiment, the current connection is the connection between the 802.11 access network and the terminal side.

Block 817: The STA/UE selects the recommended handover candidate PoAs, that is, a PoA set pfthe handover candidate PoAs according to the information of the recommended handover PoAs.

In this Block, a plurality of candidate PoAs may be recommended.

Block 818-Block 819: The MIH user layer of the STA/UE carries the information of the candidate PoAs in an MIH handover initiate response, and sends the response to the MIH user layer of the original PoA through the MIHF of the original PoA; the MIH user layer of the original PoA selects a handover target PoA according to the information of the recommended candidate PoAs.

Block 804-Block 819 are the processes that the terminal side and the network side negotiate on the handover target PoA. The handover target of the network side is the handover target PoA.

Block 820: The MIH user layer on the STA/UE side initiates the handover by sending an MIH switch command, and the STA/UE performs internal operations to prepare for the handover, for example, switching the power state to the power saving mode.

Block 821-block 822: The MIH user layer of the original PoA generates an MIH handover commit request, and sends the request to the MIHF of the original PoA; the MIHF of the original PoA then sends the request to the MIHF of the STA/UE side to initiate a handover commit request.

Block 823-Block 824: The MIH user layer of the STA/UE processes the MIH handover commit request, and sends an MIH handover commit response to the MIH user layer of the original PoA through the MIHF of the STA/UE and the MIHF of the original PoA sequentially to specify whether the handover request is to be processed or discarded.

Block 825-Block 826: After the handover is initiated, the MIHF of the handover target PoA receives a Link handover imminent event notification sent by the local network interface (3GPP); the MIHF sends a corresponding MIH link handover imminent instruction to the MIHF user layer to notify the MIH user layer that the handover is imminent. The instruction can also be sent by the STA/UE side.

Block 827: The STA/UE establishes an L2 connection with the new PoA.

In this embodiment, the handover target PoA is a 3GPP interface.

Block 828-Block 829: When the L2 connection is established, the MIHF of the handover target PoA receives a link up event sent by the local network interface, and sends a corresponding MIH link up event to the MIH user layer to notify the MIH user layer that the link is established. The instruction can also be sent by the STA/UE side.

In Block 828-Block 829: The network interface between the STA/UE and the handover target PoA can also send the link up event to the MIHF of the STA/UE, and the MIHF of the STA/UE sends the MIH link up event to the MIH user layer of the STA/UE.

Block 830: The mobile IP registration is triggered.

Block 831-bock 833: After the MIH handover commit request is sent, the MIHF of the handover target PoA sends an MIH handover complete request to the MIHF of the original PoA, and the MIHF of the original PoA then forwards the request to the STA/UE. The PoA can forward the cached data packets in an undetermined sending state to the new PoA according to the request, and releases the resources occupied by the original link.

Block 834: The 802.11 link disconnects.

Block 835-Block 836: When the original PoA terminates the old link, the network interface of the handover target PoA sends a Link down event to the MIHF of the handover target PoA, and the MIHF of the handover target PoA sends an MIH link down event to the MIH user layer of the handover target PoA, indicating that the old link has become unavailable.

In Block 835-Block 836, the network side has registered the Link down event in advance, so the original PoA can receive this event sent by the network interface with the STA/UE; when the STA/UE has registered the Link down event in advance, the network interface between the STA/UE and the original PoA can also send the Link down event to the MIHF of the STA/UE, which then sends the MIH link down event to the MIH user layer of the STA/UE, indicating that the old link has become unavailable; in this process, Block 835-Block 836 can be skipped.

Block 837-Block 839: The MIHF of the STA/UE sends the MIH handover complete response to the MIHF of the handover target PoA through the MIHF of the original PoA, and the MIHF of the handover target PoA sends the response to the MIH user layer of the handover target PoA to complete the handover.

Block 840-Block 841: After the handover is completed, the MIHF of the handover target PoA receives a link handover complete instruction from the network interface of the handover target PoA, and sends a corresponding MIH link handover complete instruction to the MIH user layer of the handover target PoA.

In Block 840-Block 841, the upper layers of the MIHF include the network layer and transport layer, which can process according to the MIH link handover complete instruction.

Block 842: The network interface of the STA/UE connected to the handover destination sends an MIH switch response to the MIH user layer of the STA/UE, indicating that the link handover is completed.

Block 843: The current session transfers to the new link (3GPP).

Block 820-Block 843 are the processes for switching the current link to the handover target PoA by the network side.

Block 844: The STA/UE dissociates from the original PoA, and the process ends.

In the above process, Block 844 can be skipped after Block 843 is performed, and the process directly ends.

In this embodiment, when the wireless environment of the current connection becomes unacceptable, the network side initiates the media independent handover. In addition, the handover can be initiated according to other requirements, for example, the current network interface needs maintenance. The original PoA connected to the STA/UE can also be other PoAs such as a 3GPP PoA, and the handover target PoA can also be other PoAs such as a 3GPP2 PoA.

Based on the previous two embodiments, the present invention realizes the handover between heterogeneous networks initiated by the terminal side and the network side respectively. The handover uses the standard primitives, and the handover target PoA is determined through negotiation, which improves the reliability and universality of the handover.

The above description only illustrates the embodiments of the present invention, but is not used to limit the protection scope of the present invention. Any modification, equivalents, and modifications within the principles of the present invention shall be covered by the protection scope of the present invention.

## Claims

1. A method for handover between heterogeneous networks, comprising:
selecting, by a terminal side Media Independent Handover, MIH, user layer, a handover target Point of Attachment, PoA;
initiating, by the terminal side MIH user layer, a MIH request;
switching the terminal to the handover target PoA; and
wherein the selecting, by the terminal side MIH user layer, the handover target PoA comprises:
obtaining, by the terminal side MIH user layer, a list of the PoAs with MIH capability from an original PoA or an MIH information server;
obtaining, by the terminal side MIH user layer, information of the PoAs with MIH capability; and
selecting, by the terminal side MIH user layer, the handover target PoA according to the information of the PoAs.

2. The method according to claim 1, wherein the obtaining a list of the PoAs with MIH capability from an original PoA or an MIH information server comprises:
sending, by the terminal side MIH user layer, an MIH capability discover request to the original PoA; broadcasting, by MIHF of the original PoA, the MIH capability discover request to other PoAs; sending, by the other PoAs with MIH capability, MIH capability discover responses to the original PoA; receiving, by the terminal side MIH user layer, the MIH capability discover responses from the original PoA; and
obtaining, by the terminal side MIH user layer, a list of PoAs with the MIH capability through the responses; or
sending, by the terminal side MIH user layer, an MIH capability discover request to an MIH information server; and obtaining, by the terminal side MIH user layer, a list of PoAs with the MIH capability from the MIH information server.

3. The method according to claim 1, wherein the obtaining the information of the PoAs with the MIH capability comprises:
sending, by the terminal side MIH user layer, a request for information of PoAs in the list to the MIH information server;
obtaining, by the terminal side MIH user layer, the information of the PoAs in the list from the MIH information server.

4. The method according to claim 2 or 3, wherein the information of the PoAs comprises one or more of: network type and identifier, carrier type and identifier, security, quality of service, QoS, and fee information.

5. The method according to claim 1, wherein the selecting the handover target PoA according to the information of the PoAs comprises:
selecting, by the terminal side MIH user layer, a set of recommended handover PoAs according to the information of the PoAs with the MIH capability;
sending, by the terminal side MIH user layer, an MIH handover initiate request containing information of the recommended handover PoAs to the original PoA;
sending, by the original PoA, a handover preparation request for reserving the resources to the recommended handover PoAs after receiving the MIH handover initiate request;
sending, by the recommended handover PoAs, handover preparation responses for indicating the resource reservation to the original PoA;
selecting, by the original PoA, recommended candidate PoAs according to the handover preparation responses;
receiving, by the terminal side MIH user layer, information of the recommended candidate PoAs from the original PoA; and
selecting, by the terminal side MIH user layer, the handover target PoA according to the information of the recommended candidate PoAs.

6. The method according to claim 1, wherein the initiating, by the terminal side MIH user layer, the MIH request comprises:
sending, by the terminal side MIH user layer, a handover commit request to the handover target PoA;
receiving, by the terminal side MIH user layer, a handover commit response for allowing the handover from the handover target PoA; and
obtaining, by the terminal MIH user layer, a handover imminent instruction notification for notifying that the handover is imminent.

## Patentansprüche

1. Verfahren für die Verbindungsübergabe zwischen heterogenen Netzen, wobei das Verfahren Folgendes umfasst:
Auswählen eines Verbindungsübergabeziel-Angriffspunkts, Verbindungsübergabeziel-PoAs, durch eine endgerätseitige Anwenderschicht für die medienunabhängige Verbindungsübergabe, MIH-Anwenderschicht;
Initiieren einer MIH-Anforderung durch die endgerätseitige MIH-Anwenderschicht;
Umschalten des Endgeräts zu dem Verbindungsübergabeziel-PoA; und
wobei das Auswählen des Verbindungsübergabeziel-PoA durch die endgerätseitige MIH-Anwenderschicht Folgendes umfasst:
Erhalten einer Liste der PoAs mit MIH-Fähigkeit von einem ursprünglichen PoA oder von einem MIH-Informationsserver durch die endgerätseitige MIH-Anwenderschicht;
Erhalten von Informationen der PoAs mit MIH-Fähigkeit durch die endgerätseitige MIH-Anwenderschicht; und
Auswählen des Verbindungsübergabeziel-PoA in Übereinstimmung mit den Informationen der PoAs durch die endgerätseitige MIH-Anwenderschicht.

2. Verfahren nach Anspruch 1, wobei das Erhalten einer Liste der PoAs mit MIH-Fähigkeit von einem ursprünglichen PoA oder von einem MIH-Informationsserver Folgendes umfasst:
Senden einer MIH-Fähigkeitsentdeckungsanforderung durch die endgerätseitige MIH-Anwenderschicht an den ursprünglichen PoA; Rundsenden der MIH-Fähigkeitsentdeckungsanforderung durch die MIHF des ursprünglichen PoA an andere PoAs; Senden der MIH-Fähigkeitsentdeckungsantworten an den ursprünglichen PoA durch die anderen PoAs mit MIH-Fähigkeit; Empfangen der MIH-Fähigkeitsentdeckungsantworten von dem ursprünglichen PoA durch die endgerätseitige MIH-Anwenderschicht; und
Erhalten einer Liste von PoAs mit der MIH-Fähigkeit durch die Antworten durch die endgerätseitige MIH-Anwenderschicht; oder
Senden einer MIH-Fähigkeitsentdeckungsanforderung an einen MIH-Informationsserver durch die endgerätseitige MIH-Anwenderschicht; und Erhalten einer Liste von PoAs mit der MIH-Fähigkeit von dem MIH-Informationsserver durch die endgerätseitige MIH-Anwenderschicht.

3. Verfahren nach Anspruch 1, wobei das Erhalten der Informationen der PoAs mit der MIH-Fähigkeit Folgendes umfasst:
Senden einer Anforderung für Informationen von PoAs in der Liste an den MIH-Informationsserver durch die endgerätseitige MIH-Anwenderschicht;
Erhalten der Informationen der PoAs in der Liste von dem MIH-Informationsserver durch die endgerätseitige MIH-Anwenderschicht.

4. Verfahren nach Anspruch 2 oder 3, wobei die Informationen der PoAs eines oder mehrere der Folgenden umfassen: Netztyp- und Netzkennungs-, Trägertyp- und Trägerkennungs-, Sicherheits-, Dienstqualitäts-, QoS-, und Gebühreninformationen.

5. Verfahren nach Anspruch 1, wobei das Auswählen des Verbindungsübergabeziel-PoAs in Übereinstimmung mit den Informationen der PoAs Folgendes umfasst:
Auswählen einer Menge empfohlener Verbindungsübergabe-PoAs in Übereinstimmung mit den Informationen der PoAs mit der MIH-Fähigkeit durch die endgerätseitige MIH-Anwenderschicht;
Senden einer MIH-Verbindungsübergabe-Initiierungsanforderung, die Informationen der empfohlenen Verbindungsübergabe-PoAs enthält, an den ursprünglichen PoA durch die endgerätseitige MIH-Anwenderschicht;
Senden einer Verbindungsübergabe-Vorbereitungsanforderung zum Reservieren der Betriebsmittel an die empfohlenen Verbindungsübergabe-PoAs nach Empfang der MIH-Verbindungsübergabe-Initiierungsanforderung durch den ursprünglichen PoA;
Senden von Verbindungsübergabe-Vorbereitungsantworten zum Angeben der Betriebsmittelreservierung an den ursprünglichen PoA durch die empfohlenen Verbindungsübergabe-PoAs;
Auswählen empfohlener Anwärter-PoAs in Übereinstimmung mit den Verbindungsübergabe-Vorbereitungsantworten durch den ursprünglichen PoA;
Empfangen von Informationen der empfohlenen Anwärter-PoAs von dem ursprünglichen PoA durch die endgerätseitige MIH-Anwenderschicht; und
Auswählen des Verbindungsübergabeziel-PoAs in Übereinstimmung mit den Informationen der empfohlenen Anwärter-PoAs durch die endgerätseitige MIH-Anwenderschicht.

6. Verfahren nach Anspruch 1, wobei das Initiieren der MIH-Anforderung durch die endgerätseitige MIH-Anwenderschicht Folgendes umfasst:
Senden einer Verbindungsübergabe-Festlegungsanforderung an den Verbindungsübergabeziel-PoA durch die endgerätseitige MIH-Anwenderschicht;
Empfangen einer Verbindungsübergabe-Festlegungsantwort zum Zulassen der Verbindungsübergabe von dem Verbindungsübergabeziel-PoA durch die endgerätseitige MIH-Anwenderschicht; und
Erhalten einer Benachrichtigung über eine Anweisung für eine nahe bevorstehende Verbindungsübergabe zur Benachrichtigung, dass die Verbindungsübergabe nahe bevorsteht, durch die endgerätseitige MIH-Anwenderschicht.

## Revendications

1. Procédé de transfert entre réseaux hétérogènes, comprenant :
la sélection, par une couche utilisateur de Transfert Indépendant du Média, MIH, côté terminal, d'un Point d'Attachement, PoA, cible de transfert ;
le lancement, par la couche utilisateur MIH côté terminal, d'une requête MIH ;
la commutation du terminal sur le PoA cible de transfert ; et
dans lequel la sélection, par la couche utilisateur MIH côté terminal, du PoA cible de transfert comprend :
l'obtention, par la couche utilisateur MIH côté terminal, d'une liste des PoA à capabilité MIH depuis un PoA initial ou un serveur d'informations MIH ;
l'obtention, par la couche utilisateur MIH côté terminal, d'informations des PoA à capabilité MIH ; et
la sélection, par la couche utilisateur MIH côté terminal, du PoA cible de transfert en fonction des informations des PoA.

2. Procédé selon la revendication 1, dans lequel l'obtention d'une liste des PoA à capabilité MIH depuis un PoA initial ou un serveur d'informations MIH comprend :
l'envoi, par la couche utilisateur MIH côté terminal, d'une requête de découverte de capabilité MIH au PoA initial ; la diffusion, par MIHF du PoA initial, de la requête de découverte de capabilité MIH à d'autres PoA ; l'envoi, par les autres PoA à capabilité MIH, de réponses de découverte de capabilité MIH au PoA initial ; la réception, par la couche utilisateur MIH côté terminal, des réponses de découverte de capabilité MIH depuis le PoA initial ; et
l'obtention, par la couche utilisateur MIH côté terminal, d'une liste de PoA à capabilité MIH par le biais des réponses ; ou
l'envoi, par la couche utilisateur MIH côté terminal, d'une requête de découverte de capabilité MIH à un serveur d'informations MIH ; et l'obtention, par la couche utilisateur MIH côté terminal, d'une liste de PoA à capabilité MIH depuis le serveur d'informations MIH.

3. Procédé selon la revendication 1, dans lequel l'obtention des informations des PoA à capabilité MIH comprend :
l'envoi, par la couche utilisateur MIH côté terminal, d'une requête d'informations de PoA dans la liste au serveur d'informations MIH ;
l'obtention, par la couche utilisateur MIH côté terminal, des informations des PoA dans la liste depuis le serveur d'informations MIH.

4. Procédé selon la revendication 2 ou 3, dans lequel les informations des PoA comprennent l'une ou plusieurs des informations suivantes : type et identifiant de réseau, type et identifiant de support, sécurité, qualité de service, QoS, et taxe.

5. Procédé selon la revendication 1, dans lequel la sélection du PoA cible de transfert en fonction des informations des PoA comprend :
la sélection, par la couche utilisateur MIH côté terminal, d'un ensemble de PoA de transfert recommandés en fonction des informations des PoA à capabilité MIH ;
l'envoi, par la couche utilisateur MIH côté terminal, d'une requête de lancement de transfert MIH contenant des informations des PoA de transfert recommandés au PoA initial ;
l'envoi, par le PoA initial, d'une requête de préparation de transfert pour réserver les ressources aux PoA de transfert recommandés après réception de la requête de lancement de transfert MIH ;
l'envoi, par les PoA de transfert recommandés, des réponses de préparation de transfert pour indiquer la réservation de ressources au PoA initial ;
la sélection, par le PoA initial, de PoA candidats recommandés en fonction des réponses de préparation de transfert ;
la réception, par la couche utilisateur MIH côté terminal, d'informations des PoA candidats recommandés depuis le PoA initial ; et
la sélection, par la couche utilisateur MIH côté terminal, du PoA cible de transfert en fonction des informations des PoA candidats recommandés.

6. Procédé selon la revendication 1, dans lequel le lancement, par la couche utilisateur MIH côté terminal, de la requête MIH comprend :
l'envoi, par la couche utilisateur MIH côté terminal, d'une requête d'engagement de transfert au PoA cible de transfert ;
la réception, par la couche utilisateur MIH côté terminal, d'une réponse d'engagement de transfert pour autoriser le transfert depuis le PoA cible de transfert ; et
l'obtention, par la couche utilisateur MIH côté terminal, d'une notification d'instruction de transfert imminent pour notifier que le transfert est imminent.
